Europäisches Patentamt

(19) European Patent Office

Office européen des brevets

(11) Publication number: **0 078 514**
**B1**

# EUROPEAN PATENT SPECIFICATION

(45) Date of publication of patent specification: **25.09.85**

(21) Application number: **82109989.2**

(22) Date of filing: **28.10.82**

(51) Int. Cl.⁴: **A 01 N 43/90, A 01 N 43/78,**
**A 01 N 37/44, A 01 N 25/30,**
**C 05 C 11/00**

(54) **Improvement to biostimulating compositions for plants.**

(30) Priority: **30.10.81 IT 2477481**

(43) Date of publication of application:
**11.05.83 Bulletin 83/19**

(45) Publication of the grant of the patent:
**25.09.85 Bulletin 85/39**

(84) Designated Contracting States:
**AT BE CH DE FR GB LI LU NL SE**

(56) References cited:
**EP-A-0 022 666**
**FR-A-2 021 769**
**GB-A-2 004 856**
**US-A-3 537 838**

(73) Proprietor: **Montedison S.p.A.**
**31, Foro Buonaparte**
**I-20121 Milan (IT)**

(72) Inventor: **Radice, Marco**
**12/A Via Alzaia Trieste**
**Corsico Milan (IT)**
Inventor: **Sacchi, Alessandro**
**7, Via Delle Acacie**
**Novara (IT)**
Inventor: **Dal Moro, Anacleto**
**22, Viale Ungheria**
**Milan (IT)**

(74) Representative: **Weinhold, Peter, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz**
**Siegfriedstrasse 8**
**D-8000 München 40 (DE)**

Courier Press, Leamington Spa, England.

**0 078 514**

**Description**

This invention relates to biostimulating compositions for plants and, more particularly, to improved biostimulating compositions which are obtainable by addition of certain polyoxyethylated surfactants to known biostimulating compositions based on cysteine or homocysteine and/or reaction products thereof with aldehydes and/or derivatives of such products (such as, for example, the thiazolidine-4-carboxylic acid and the salts or derivatives thereof, the thiazine-carboxylic acid and the salts or derivatives thereof and, in general, all those compounds which are obtainable by reacting cysteine or homocysteine with aldehydes) in the presence of other biostimulants such as, pholic acid.

A biostimulating composition based on condensation products of cysteine and/or homocysteine or derivatives thereof with aldehydes or derivatives thereof has been described in Roumanian patent No. 50,795.

Belgian patent No. 870,898 describes an improved composition prepared by adding a buffer solution to the compositions according to the Roumanian patent in order to maintain the pH between 6 and 7.5. That leads to an increase in the harvest in respect to the biostimulating effect of the compositions described in the abovecited Roumanian patent.

We have now found that the addition of a surfactant, of the type and in the amounts specified hereinbelow, to the above-mentioned biostimulating compositions results in a further increase of the biostimulating capabilities, so promoting the growth and the bloom of the plants and increasing the harvest.

Thus, a subject matter of the present invention is biostimulating compositions for plants based on cysteine or homologues thereof and/or their reaction products with aldehydes and/or their salts and/or thiazolidine-4-carboxylic acid, thiazine-carboxylic acid, N-acetyl-thiazolidine-4-carboxylic acid, the salts of the aforesaid acids and on pholic acid or salts thereof, consisting an adding to such compositions an additive, characterized in that the additive is one or more surfactants selected from the derivates of sorbitol esterified with 1, 2 or 3 moles of fatty acid containing 12—18 carbon atoms and then polyethoxylated, and the derivates of glycerides (mono, di or triglycerides) of polyethoxylated $C_{12}$—$C_{18}$-fatty acids in such amount that the weight ratio between the cysteine or derivatives thereof and the surfactant ranges from 0.06 to 3.5.

For practical uses, the biostimulating compositions according to the present invention are preferably solubilized in water along with other adjuvant substances: therefore special embodiments of the biostimulating compositions ready for use, after dilution with water, consist of:

A) Cysteine or its homologues and/or reaction products thereof with aldehydes and derivatives mentioned above and/or their salts—5% by weight

B) Pholic acid* or salts thereof—0.1% by weight

C) One or more surfactants belonging to the class of the derivatives of sorbitol esterified with 1 to 3 moles of a fatty acid containing 12—18 carbon atoms and condensed with ethylene oxide or to the class of the glycerides of polyoxyethylated fatty acids, in such amount that the weight ratio between component A and component C ranges from 0.06 to 3.5.

D) Sulphosalicylic acid—1.1% by weight

E) Hexamethylenetetramine—0.6% by weight

F) Sodium bicarbonate ($NaHCO_3$)—1.5—2.2% by weight

G) Potassium carbonate ($K_2CO_3$)—0.1—0.15% by weight

H) Magnesium carbonate ($MgCO_3$)—0.2—0.3% by weight

I) Water—the difference to 100%.

The cysteine derivatives or homologues (component A) are those described in the above-cited Roumanian patent and Belgian patent. Among these we may cite cysteine itself, homocysteine, the products obtainable by condensation of an aldehyde with cysteine or homocysteine; thiazolidine-4-carboxylic acid, thiazine-carboxylic acid, N-acetyl-thiazolidine-4-carboxylic acid and the salts of the aforesaid acids and the salts of cysteine or of homocysteine.

As a source of cysteine is equally suited L-cysteine of natural origin as well as D,L-cysteine prepared by synthesis. Consequently, depending on the form of cysteine used, the derivatives thereof will be in the L-form or in the D,L-form.

In the present type of compositions and from the point of view of biostimulating activity, the preferred compounds of group A are thiazolidine-4-carboxylic acid and N-acetyl-thiazolidine-4-carboxylic acid.

Hexamethylenetetramine (component E) can be substituted, in accordance with what is described in the above-mentioned patents, by aldehydes or by other substances suited to release aldehydes.

The surfactant (component C), which represents the characterizing element of the compositions of the invention in respect of the known compositions, consists of a single product or of a mixture of surfactants selected from the class of the sorbitol derivatives esterified with 1,2 or 3 moles of fatty acids containing 12—18 carbon atoms, (e.g. the lauric, myristic, palmitic, stearic, and oleic acids) condensed with ethylene oxide, and from the class of the glycerides of fatty acids (mono-, di- or triglycerides) condensed with ethylene oxide. The fatty acid from which said glycerides are derived also contain 12—18 carbon atoms.

_____

*also known as "folic acid"

2

0 078 514

The number of moles of ethylene oxide per mole of ethoxylated substrate is not critical over a wide range. It is preferable to employ sorbitol derivatives or ethoxylated glycerides containing a number of ethylene oxide moles ranging from 10 to 25, as such products are commercially more available.

From some experimental tests carried out by us by employing marked compounds it is apparent that component A more easily penetrates into the plants if it is formulated according to the present invention.

It may be assumed therefore that, as in other cases, the role played by the surfactant is that of promoting the penetration of the mixture or of some components thereof into the vegetable tissues.

However it is still surprising that many surfactants belonging to classes other than those listed as component C have proved not suitable for such use since they are ineffective in promoting the penetration of component A into the plant or because they impart phytotoxicity to the mixture. Among the unsuitable surfactants we may cite the quaternary ammonium salts, such as dimethyl-benzyl-alkyl-ammonium chloride, ethoxylated bis-phenyl-phenols, ethoxylated alkylphenols and ethoxylated phosphorylated alkylphenols.

The biostimulating compositions according to the present invention are preparable according to various methods. For example, it is possible to prepare the aqueous solution of the different components and to add thereto the surfactant in a predetermined amount; it is possible to dilute in the predetermined water amount the mixture of all the components, surfactant included, or the various components may be dissolved, in any order, in the surfactant aqueous solution.

For the practical uses it is preferable to dilute the compositions with water in order to facilitate a homogeneous distribution of the active substances.

The compositions according to the present invention are suited to different kinds of treatment. It is possible to treat either the seeds or the roots or the stems and leaves of the plants; the application can be accomplished both in the soil and directly on the vegetation.

The action of the composition according to this invention results in an increase of the growth of the plants which assume also a more luxuriant appearance, and in an increase in the harvest.

Due to these properties, the compositions can be usefully employed on a great number of agrarian cultures as well as on ornamental plants.

The composition amount to be used varies as a function of the type of treatment and of several other factors such as, for example, the type of culture and the climatic and environmental conditions. Generally, composition amounts of from 10 to 500 g/ha are sufficient to obtain satisfactory results in the treatment of the stems and leaves of the plants or in the treatment of the soil. 100—200 g of properly diluted biostimulating composition are required to treat the seed amount necessary to sow one hectare of ground.

The following examples are now given to better illustrate the present invention.

For the sake of simplicity and of a better understanding, the surfactants employed are indicated by abbreviations.

Surfactants utilized in the examples of compositions according to the present invention:

SL 20 ETO=sorbitol monolaurate condensed with 20 moles of ethylene oxide. The product utilized was the one marketed by the firm Atlas under the trade-mark TWEEN 20.

SO 20 ETO=sorbitol mono-oleate condensed with 20 moles of ethylene oxide. The product utilized was the one marketed by the firm ROL under the trade-mark SETROLENE O.

SO 10 ETO=sorbitol mono-oleate condensed with 10 moles of ethylene oxide. The product utilized was the one marketed by the firm ROL under the trade-mark EMULSON 10/OM.

OR 25 ETO=hydrogenated castor oil condensed with 25 moles of ethylene oxide. The product utilized was the one marketed by the firm ROL under the trade-mark ROLFOR COH.

OR 10 ETO=hydrogenated castor oil condensed with 10 moles of ethylene oxide. The product utilized was the one marketed by the firm ROL under the trade-mark ROLFOR COH/10.

Surfactants employed in check compositions:

DBAA=dimethyl-benzyl-alkyl ($C_{12}$—$C_{16}$)-ammonium chloride. The product utilized was the one marketed by the firm ROL under the trade-mark ROLQUAT CDM/BC.

KFF 13 ETO=bis-phenyl-phenol condensed with 13 moles of ethylene oxide. The product utilized was the one marketed by the firm ROL under the trade-mark EMULSON 13 A.

NF 20 ETO=nonyl-phenol condensed with 20 moles of ethylene oxide. The product utilized was the one marketed by the firm ROL under the trade-mark EMULSON 20 B.

NFP 15 ETO=phosphorylated nonyl-phenol condensed with 15 moles of ethylene oxide. The product utilized was the one marketed by the firm ROL under the trade-mark ROLFEN 15.

NF 9 ETO=nonyl-phenol condensed with 9 moles of ethylene oxide. The product utilized was the one marketed by the firm ROL under the trade-mark EMULSON 9 B.

Example 1

Absorption by the leaves.

A starting solution was prepared which contained N-acetyl-thiazolidine-4-carboxylic acid marked by isotope $^{14}$C (hereinafter referred to as AATC-$^{14}$C) having the following per cent composition:

3

## 0 078 514

| | |
|---|---|
| AATC-$^{14}$C | 5% by weight |
| Pholic acid | 0.1% by weight |
| Hexamethylenetetramine | 0.6% by weight |
| Sulphosalicylic acid | 1.1% by weight |
| NaHCO$_3$ | 2.2% by weight |
| K$_2$CO$_3$ | 0.15% by weight |
| MgCO$_3$ | 0.3% by weight |
| Water | the difference to 100% |

The starting solution containing the marked compound was diluted with water (about 1:150) in order to obtain an AATC-$^{14}$C concentration equal to $2.10^{-3}$ molar (Solution A). Lots of solution A were additional with different surfactants in order to prepare the solutions indicated in the following Table 1.

TABLE 1
Solutions according to the invention and check solutions.

| Solution[1] | Surfactant[2] | Surfactant amount in the solution (%) | Weight ratio between cysteine derivative and surfactant |
|---|---|---|---|
| A | — | 0 | — |
| A—1 | SL 20 ETO | 0.01 | 3.3 |
| A—2 | SL 20 ETO | 0.03 | 1.1 |
| A—3 | SL 20 ETO | 0.1 | 0.33 |
| A—4 | SL 20 ETO | 0.3 | 0.11 |
| A—5 | OR 25 ETO | 0.1 | 0.33 |
| A—6 | OR 10 ETO | 0.1 | 0.33 |
| A—7 | SO 20 ETO | 0.1 | 0.33 |
| A—8 | SO 10 ETO | 0.1 | 0.33 |
| B—1 | DBAA | 0.1 | 0.33 |
| B—2 | BFF 13 ETO | 0.1 | 0.33 |
| B—3 | NF 20 ETO | 0.1 | 0.33 |
| B—4 | NFP 15 ETO | 0.1 | 0.33 |
| B—5 | NF 9 ETO | 0.1 | 0.33 |

Notes to Table 1:
[1] The solutions from A—1 to A—8 contain surfactants according to the invention, while the solutions from B—1 to B—5 were used as a check.
[2] The abbreviated names of the surfactants correspond to the compounds indicated in the introduction to the examples.

The solutions of Table 1 were applied to the upper or lower face of the leaves of tomato plants, strawberry plants and *Vigna sinensis* by means of a micropipette (100 µ of solution in very small droplets on a surface of about 2 cm$^2$). After application of the solutions containing the marked product, the plants

4

were kept in a laboratory with a photoperiod of 8 hours of light (400 lux) and 16 hours of darkness, at a humidity of 40% and a temperature of 19—23°C. 24 hours after the treatment, the leaves on which the solution had been applied, after proper washings with water, were cut into small pieces and digested with a quaternary ammonium salt solution at room temperature.

After 12 hours, isopropyl alcohol (1 ml), hydrochloric acid (0.5 ml) and hydrogen peroxide (1 ml) were added to the tissue. The sample was allowed to stand for 4 hours at 50°C, whereupon 10 ml of an aqueous scintillating liquid (Lumagel, based on xylene, produced by the firm Lumac) were added thereto. Readings were then carried out by means of a TRICARB scintillograph (HEWLETT PACKARD). The data recorded on the following tables 2, 3 and 4 express the percentage of radioactivity detected in the sample in respect to the radioactivity of the applicated solution and correspond to the percentage of AATC-$^{14}$C absorbed by the leaves after 24 hours under the conditions described hereinbefore.

TABLE 2
Absorption of AATC-$^{14}$C in tomato plants after 24 hours.

| Applied solution (see Table 1) | Detected radioactivity in respect to the one of the applied solution (%) |
|---|---|
| A | 2 |
| A—1 | 9 |
| A—2 | 19 |
| A—3 | 40 |
| A—4 | 70 |
| A—5 | 49 |
| A—6 | 44 |
| A—7 | 58 |
| A—8 | 55 |
| B—1 | n.d.[1] |
| B—2 | 10 |
| B—3 | 20[2] |
| B—5 | n.d.[1] |

Notes to Table 2.
[1] n.d.=not detected because the use of the solution resulted in phytotoxic effects.
[2] The use of the Solution B—3 revealed evident signs of phytotoxicity.

TABLE 3
Absorption of AATC-$^{14}$C in strawberry plants after 24 hours.

| Applied solution (see Table 1) | Detected radioactivity in respect to the one of the applied solution (%) |
|---|---|
| A | 5 |
| A—3 | 97 |
| A—7 | 94 |

TABLE 4

Absorption of AATC-$^{14}$C in plants of *Vigna Sinensis* after 24 hours.

| Applied solution (see Table 1) | Detected radioactivity in respect to the one of the applied solution (%) |
|---|---|
| A | 5 |
| A—3 | 36 |
| A—5 | 72 |
| A—6 | 48 |
| A—7 | 75 |
| A—8 | 81 |
| B—1 | n.d.[1] |
| B—2 | 5 |
| B—3 | 10[2] |
| B—4 | 14[2] |
| B—5 | n.d.[1] |

Notes to Table 4

[1] n.d.=not detected because the use of the solution resulted in phytotoxic effects.

[2] The use of the solutions B—3 and B—4 exhibited evident symptoms of phytotoxicity.

Example 2

Biostimulating action on rice

The following compositions were prepared:

| Composition A (check) | |
|---|---|
| N-acetyl-thiazolidine-4-carboxylic acid | 5 % by weight |
| Pholic acid | 0.1% by weight |
| Hexamethylenetetramine | 0.6% by weight |
| Sulphosalicylic acid | 1.1% by weight |
| NaHCO$_3$ | 2.2% by weight |
| K$_2$CO$_3$ | 0.15% by weight |
| MgCO$_3$ | 0.3% by weight |
| Water | the difference to 100% |

Composition A+ (according to the invention)

| | |
|---|---|
| N-acetyl-thiazolidine-4-carboxylic acid | 5% by weight |
| Pholic acid | 0.1% by weight |
| Hexamethylenetetramine | 0.6% by weight |
| Sulphosalicylic acid | 1.1% by weight |
| $NaHCO_3$ | 2.2% by weight |
| $K_2CO_3$ | 0.15% by weight |
| $MgCO_3$ | 0.3% by weight |
| SL 20 ETO | 3% by weight |
| Water | the difference to 100%. |

Three adjacent rice fields located at Siziano (Pavia) were sprayed, during the culture tillering, respectively (1) with 500 l/ha of water (check), (2) with 500 l/ha of an aqueous solution of 500 g of composition A, and (3) with 500 l/ha of an aqueous solution of 400 g of composition A+ the third one. After the normal growth period and the usual phyto-sanitary defence of the culture, the crop was harvested.

The rice yields of the three fields were as follows:
— check field 5300 kg/ha [53 (q/ha)]
— field treated with composition A: 6500 kg/ha [65 (q/ha)]
— field treated with composition A+: 7000 kg/ha [70 (q/ha)]

Example 3
Biostimulating action on wheat

Three adjacent wheat fields located at Fabbrico (Reggio Emilia) were treated, during the culture tillering, respectively (1) with 500 l/ha of water (check), (2) with 500 l/ha of an aqueous solution of 500 g of composition A (see example 2), and (3) with 500 l/ha of an aqueous solution of 400 g of composition A+ (see example 2). After the normal growth period and the usual phyto-sanitary defence of the culture, the crop harvested.

The wheat yields were as follows:
— check field: 7000 kg/ha [70 (q/ha)]
— field treated with composition A: 7800 kg/ha [78 (q/ha)]
— field treated with composition A+: 8400 kg/ha [84 (q/ha)]

Example 4

By admixture of the ingredients, the compositions according to the present invention reported on Table 5 were prepared.

TABLE 5
Compositions according to the invention (ingredients expressed as % by weight).

| | Ingredients | Compositions No. | | | | | | | | | | | | | |
|---|---|---|---|---|---|---|---|---|---|---|---|---|---|---|---|
| | | 1[1] | 2 | 3 | 4 | 5 | 6 | 7 | 8 | 9 | 10 | 11 | 12 | 13 | 14 |
| A | ATC[2] | — | 5 | — | — | — | — | 5 | 5 | — | — | — | 5 | — | — |
| | AATC[3] | 5 | — | 5 | 5 | 5 | 5 | — | — | 5 | 5 | 5 | — | 5 | 5 |
| B | Pholic acid | 0.1 | 0.1 | 0.1 | 0.1 | 0.1 | 0.1 | 0.1 | 0.1 | 0.1 | 0.1 | 0.1 | 0.1 | 0.1 | 0.1 |
| C | SL 20 ETO | 3 | 3 | — | — | — | — | — | — | 1.42 | 20 | 50 | 20 | 2 | 5 |
| | SO 20 ETO | — | — | 3 | — | — | — | — | — | — | — | — | — | — | — |
| | SO 10 ETO | — | — | — | 3 | — | — | 3 | — | — | — | — | — | — | — |
| | OR 25 ETO | — | — | — | — | 3 | — | — | — | — | — | — | — | — | — |
| | OR 10 ETO | — | — | — | — | — | 3 | — | 3 | — | — | — | — | 3 | — |
| D | Sulphosalicylic acid | 1.1 | 1.1 | 1.1 | 1.1 | 1.1 | 1.1 | 1.1 | 1.1 | 1.1 | 1.1 | 1.1 | 1.1 | 1.1 | 1.1 |
| E | Hexamethylenetetramine | 0.6 | 0.6 | 0.6 | 0.6 | 0.6 | 0.6 | 0.6 | 0.6 | 0.6 | 0.6 | 0.6 | 0.6 | 0.6 | 0.6 |
| F | $NaHCO_3$ | 2.2 | 2.2 | 2.2 | 2.2 | 2.2 | 2.2 | 2.2 | 2.2 | 2.2 | 2.2 | 2.2 | 2.2 | 1.5 | 2.2 |
| G | $K_2CO_3$ | 0.15 | 0.15 | 0.1 | 0.15 | 0.15 | 0.15 | 0.15 | 0.15 | 0.15 | 0.15 | 0.15 | 0.15 | 0.15 | 0.15 |
| H | $MgCO_3$ | 0.3 | 0.3 | 0.3 | 0.3 | 0.3 | 0.3 | 0.3 | 0.3 | 0.3 | 0.3 | 0.3 | 0.3 | 0.3 | 0.2 |
| I | Water | up to 100 | up to 100 | up to 100 | up to 100 | up to 100 | up to 100 | up to 100 | up to 100 | up to 100 | up to 100 | up to 100 | up to 100 | up to 100 | up to 100 |

Notes to Table 5:
[1] Composition No 1 is the same as composition A+ described in Example 2.
[2] ATC=thiazolidine-4-carboxylic acid.
[3] AATC=N-acetyl-thiazolidine-4-carboxylic acid.

# 0 078 514

Example 5

The compositions specified in the preceding example (Table 5) and composition A (see Example 2) according to Belgian Patent 870,898 were tested for biostimulating activity on rice cultures according to the procedure of Example 2. The results have been expressed as percentage increase in the harvest weight (referred to one hectare of culture of rice) with respect to the yield of the check consisting of an adjacent rice field not treated with any biostimulating composition.

The data are reported on the following Table 6.

TABLE 6

Biostimulating activity on rice

| Composition No. | Percentage increase in harvest weight |
|---|---|
| 1 | 33 |
| 2 | 29 |
| 3 | 32 |
| 4 | 31 |
| 5 | 34 |
| 6 | 30 |
| 7 | 28 |
| 8 | 29 |
| 9 | 28 |
| 10 | 34 |
| 11 | 34 |
| 12 | 32 |
| 13 | 35 |
| 14 | 34 |
| A | 22 |

Example 6

The compositions specified on Table 5 and composition A (Example 2) according to Belgian Patent 870,898 were tested for biostimulating activity on wheat cultures according to the procedure of Example 3.

The results have been expressed as percentage increase in the harvest weight (referred to one hectare of culture) with respect to the yield of the check consisting of an adjacent wheat field not treated with any biostimulating composition.

The data are reported on the following Table 7.

TABLE 7

Biostimulating activity on wheat.

| Composition No. | Percentage increase in harvest weight |
|:---:|:---:|
| 1 | 20 |
| 2 | 18 |
| 3 | 21 |
| 4 | 22 |
| 5 | 19 |
| 6 | 23 |
| 7 | 21 |
| 8 | 19 |
| 9 | 20 |
| 10 | 20 |
| 11 | 21 |
| 12 | 19 |
| 13 | 22 |
| 14 | 21 |
| A | 11 |

**Claims**

1. Biostimulating compositions for plants based on cysteine or homologues thereof and/or their reaction products with aldehydes and/or their salts and/or thiazolidine-4-carboxylic acid, thiazine-carboxylic acid, N-acetyl-thiazolidine-4-carboxylic acid, the salts of the aforesaid acids, and on pholic acid or salts thereof, consisting in adding to such compositions an additive, characterized in that the additive is one or more surfactants selected from the derivates of sorbitol esterified with 1, 2 or 3 moles of fatty acid containing 12—18 carbon atoms and then polyethoxylated, and the derivates of glycerides (mono, di or triglycerides) of polyethoxylated $C_{12}$—$C_{18}$-fatty acids in such amount that the weight ratio between the cysteine or derivatives thereof and the surfactant ranges from 0.06 to 3.5.

2. Biostimulating compositions for plants consisting of:

A) Cysteine or homologues thereof and/or their reaction products with aldehydes and/or salts thereof and/or thiazolidine-4-carboxylic acid, thiazine-carboxylic acid, N-acetyl-thiazolidine-4-carboxylic acid and the salts of the aforesaid acids—5% by weight

B) Pholic acid or salts thereof—0.1% by weight

C) One or more surfactants selected from the derivatives of sorbitol esterified with 1, 2 or 3 moles of a fatty acid containing 12—18 carbon atoms and polyoxyethylated, and the derivates of glycerides (mono, di or triglycerides) of polyethoxylated $C_{12}$—$C_{18}$-fatty acids in such amount that the weight ratio between component A and the surfactant ranges from 0.06 to 3.5

D) Sulphosalicylic acid—1.1% by weight

E) Hexamethylenetetramine—0.6% by weight

F) $NaHCO_3$—1.5—2.2% by weight

G) $K_2CO_3$—0.1—0.15% by weight

H) $MgCO_3$—0.2—0.3% by weight

I) Water—the difference to 100%

3. A composition according to claim 1, in which the cysteine derivative is N-acetyl-thiazolidine-4-carboxylic acid.

4. A composition according to claim 2, in which the cysteine derivative is N-acetyl-thiazolidine-4-carboxylic acid.

5. A method of increasing the growth and the harvest of plants of agrarian interest, consisting in spraying the cultivation or the field with an effective amount of a biostimulating composition according to claim 1, preferably diluted with water.

6. A method of increasing the growth and the harvest of plants of agrarian interest consisting in spraying the cultivations or the field with an effective amount of a biostimulating composition according to claim 2, preferably diluted with water.

7. A method of increasing the growth and the harvest of plants of agrarian interest according to claim 6, consisting in using an amount of biostimulating composition according to claim 2 ranging from 10 to 500 g/ha.

8. A method of increasing the growth and the harvest of plants of agrarian interest consisting in treating the seeds, prior to the sowing, with an effective amount of a biostimulating composition according to claim 1, preferably diluted with water.

9. A method of increasing the growth and the harvest of plants of agrarian interest consisting in treating the seeds, prior to the sowing, with an effective amount of a biostimulating composition according to claim 2, preferably diluted with water.

10. A method of increasing the growth and the harvest of plants of agrarian interest according to claim 9, consisting in using an amount of biostimulating composition according to claim 2 ranging from 100 to 200 g for the treatment of the amount of seeds necessary to sow one hectare of soil.

**Revendications**

1. Compositions de stimulation biologique de plantes à base de cystéine ou de ses homologues et/ou de leurs produits de réaction avec des aldéhydes et/ou de leurs sels et/ou d'acide thiazolidine-4-carboxylique, d'acide thiazine-carboxylique, d'acide N-acétyl-thiazolidine-4-carboxylique, des sels des acides ci-dessus et d'acide pholique ou de ses sels, compositions auxquelles un additif est ajouté, caractérisées en ce que l'additif est constitué d'un ou de plusieurs agents tensioactifs choisi parmi les dérivés du sorbitol estérifiés par 1, 2 ou 3 moles d'acide gras contenant de 12 à 18 atomes de carbone et ensuite polyéthoxylés, et de dérivés de glycérides (mono, di ou triglycérides) d'acides gras en $C_{12}$ à $C_{18}$ polyéthoxylés en quantité telle que le rapport pondéral entre la cystéine ou ses dérivés et l'agent tensio-actif soit compris entre 0,06 et 3,5.

2. Compositions de stimulation biologique de plantes constituées:

A) de cystéine ou de ses homologues et/ou de leurs produits de réaction avec des aldéhydes et/ou de leurs sels et/ou d'acide thiazolidine-4-carboxylique, d'acide thiazine-carboxylique, d'acide N-acétyl-thiazolidine-4-carboxylique et des sels des acides ci-dessus—5% en poids

B) d'acide pholique ou ses sels—0,1% en poids

C) d'un ou de plusieurs agents tensio-actifs choisis parmi les dérivés du sorbitol estérifiés par 1, 2 ou 3 moles d'un acide gras contenant de 12 à 18 atomes de carbone et polyéthoxylés, et de dérivés de glycérides (mono, di ou triglycérides) d'acides gras en $C_{12}$ à $C_{18}$ polyéthoxylés en quantité telle que le rapport pondéral entre le composant A) et l'agent tensio-actif soit compris entre 0,06 et 3,5.

D) acide sulfosalicylique—1,1% en poids

E) hexaméthylènetétramine—0,6% en poids

F) $NaHCO_3$—1,5 à 2,2% en poids

G) $K_2CO_3$—0,1 à 0,15% en poids

H) $MgCO_3$—0,2 à 0,3% en poids

I) eau—le complément à 100%

3. Une composition selon la revendication 1, dans laquelle le dérivé de la cystéine est l'acide N-acétyl-thiazolidine-4-carboxylique.

4. Une composition selon la revendication 2, dans laquelle le dérivé de la cystéine est l'acide N-acétyl-thiazolidine-4-carboxylique.

5. Une méthode d'augmentation de la croissance et de la récolte de plantes agricoles intéressantes consistant à pulvériser la culture ou le champ avec une quantité efficace d'une composition de stimulation biologique selon la revendication 1, de préférence diluée dans l'eau.

6. Une méthode d'augmentation de la croissance et de la récolte de plantes agricoles intéressantes consistant à pulvériser la culture ou le champ avec une quantité efficace d'une composition de stimulation biologique selon la revendication 2, de préférence diluée dans l'eau.

7. Une méthode d'augmentation de la croissance et de la récolte de plantes agricoles intéressantes selon la revendication 6, consistant à utiliser une quantité de composition de stimulation biologique selon la revendication 2 allant de 10 à 500 g/ha.

8. Une méthode d'augmentation de la croissance et de la récolte de plantes agricoles intéressantes consistant à traiter les graines, avant de les semer, avec une quantité efficace de composition de stimulation biologique selon la revendication 1, de préférence diluée dans l'eau.

9. Une méthode d'augmentation de la croissance et de la récolte de plantes agricoles intéressantes consistant à traiter les graines, avant de les semer, avec une quantité efficace de composition de stimulation biologique selon la revendication 2, de préférence diluée dan l'eau.

10. Une méthode d'augmentation de la croissance et de la récolte de plantes agricoles intéressantes

**0 078 514**

selon la revendication consistant à utiliser une quantité de composition de stimulation biologique selon la revendication 2, comprise entre 100 et 200 g pour le traitement de la quantité de graines nécessaire pour semer un hectare de sol.

**Patentansprüche**

1. Biostimulierende Zusammensetzungen für Pflanzen auf der Basis von Cystein oder Homologen desselben und/oder deren Reaktionsprodukten mit Aldehyden und/oder deren Salzen und/oder Thiazolidin-4-carbonsäure, Thiazin-carbonsäure, N-Acetylthiazolidin-4-carbonsäure, den Salzen der oben genannten Säuren oder von Folsäure oder Salzen derselben, unter Zugabe eines Zusatzes zu solchen Zusammensetzungen, dadurch gekennzeichnet, daß der Zusatz ein oder mehrere oberflächenaktive Mittel, ausgewählt aus den Derivaten von Sorbit, verestert mit 1, 2 oder 3 Mol einer 12 bis 18 Kohlenstoffatome enthaltenden Fettsäure und dann polyethoxyliert, und den Derivaten von Glyceriden (Mono-, Di- oder Triglyceriden) polyethoxylierter $C_{12}$—$C_{18}$ Fettsäuren, in solcher Menge, daß das Gewichtsverhältnis zwischen dem Cystein oder dessen Derivaten und dem oberflächenaktiven Mittel 0,06 bis 3,5 beträgt.

2. Biostimulierende Zusammensetzungen für Pflanzen, bestehend aus

A) Cystein oder dessen Homologen und/oder deren Reaktionsprodukten mit Aldehyden und/oder Salzen derselben und/oder Thiazolidin-4-carbonsäure, Thiazincarbonsäure, N-Acetyl-thiazolidin-4-carbonsäure und den Salzen der oben genannten Säuren—5 Gew.-%

B) Folsäure oder Salzen derselben—0,1 Gew.-%

C) einem oder mehreren oberflächenaktiven Mitteln, ausgewählt aus den Derivaten von Sorbit, verestert mit 1, 2 oder 3 Mol einer 12 bis 18 Kohlenstoffatome enthaltenden Fettsäure und polyoxyethyliert, und den Derivaten von Glyceriden (Mono-, Di- oder Triglyceride) von polyethoxylierten $C_{12}$—$C_{18}$ Fettsäuren, in solcher Menge, daß das Gewichtsverhältnis zwischen Komponente A und dem oberflächenaktiven Mittel von 0,06 bis 3,5 beträgt

D) Sulfosalicylsäure—1,1 Gew.-%

E) Hexamethylentetramin—0,6 Gew.-%

F) $NaHCO_3$—1,5 bis 2,2 Gew.-%

G) $K_2CO_3$ 0,1 bis 0,15 Gew.-%

H) $MgCO_3$—0,2 bis 0,3 Gew.-%

I) Wasser aufgefüllt auf 100%.

3. Zusammensetzung nach Anspruch 1, in welcher das Cysteinderivat N-Acetyl-thiazolidin-4-carbonsäure ist.

4. Zusammensetzung nach Anspruch 2, in welcher das Cysteinderivat N-Acetyl-thiazolidin-4-carbonsäure ist.

5. Verfahren zur Erhöhung des Wachstums und der Ernte von landwirtschaftlichen Nutzpflanzen, bestehend aus dem Besprühen der Kultur oder des Feldes mit einer wirksamen Menge einer biostimulierenden Zusammensetzung nach Anspruch 1, vorzugsweise mit Wasser verdünnt.

6. Verfahren zur Erhöhung des Wachstums und der Ernte von landwirtschaftlichen Nutzpflanzen, bestehend aus dem Besprühen der Kulturen oder des Feldes mit einer wirksamen Menge einer biostimulierenden Zusammensetzung nach Anspruch 2, vorzugsweise mit Wasser verdünnt.

7. Verfahren zur Erhöhung des Wachstums und der Ernte von landwirtschaftlichen Nutzpflanzen gemäß Anspruch 6, bestehend aus der Verwendung einer Menge im Bereich von 10 bis 500 g/ha der biostimulierenden Zusammensetzung nach Anspruch 2.

8. Verfahren zur Erhöhung des Wachstums und der Ernte von landwirtschaftlichen Nutzpflanzen, bestehend in der Behandlung der Samen vor dem Aussäen mit einer wirksamen Menge einer biostimulierenden Zusammensetzung nach Anspruch 1, vorzugsweise mit Wasser verdünnt.

9. Verfahren zur Erhöhung des Wachstums und der Ernte von landwirtschaftlichen Nutzpflanzen, bestehend in der Behandlung der Samen vor dem Aussäen mit einer wirksamen Menge einer biostimulierenden Zusammensetzung nach Anspruch 2, vorzugsweise mit Wasser verdünnt.

10. Verfahren zur Erhöhung des Wachstums und der Ernte von landwirtschaftlichen Nutzpflanzen gemäß Anspruch 9, bestehend aus der Verwendung einer Menge der biostimulierenden Zusammensetzung nach Anspruch 2 im Bereich von 100 bis 200 g zur Behandlung der Samenmenge, die zum Säen von 1 ha Boden nötig ist.